# FASCICULE DE BREVET EUROPEEN

(11) **EP 0 430 814 B1**
(45) Date de publication et mention de la délivrance du brevet: **21.12.1994**
(21) Numéro de dépôt: 90403414.7
(22) Date de dépôt: 30.11.1990
(51) Int. Cl.: B60Q 1/04

(54) **Capsule, notamment pour le montage d'une tête de vis de réglage d'orientation sur un réflecteur de projecteur de véhicule automobile**
Kapsel, insbesondere zur Montage eines Stellschraubenkopfs für die Einstellung eines Reflektors eines Automobilscheinwerfers
Capsule, especially for mounting the head of a calibrating screw of a headlampreflector for an automobile

(30) Priorité: 01.12.1989 FR 8915894
(43) Date de publication de la demande: 05.06.1991
(73) Titulaire: VALEO VISION, 93000 Bobigny (FR)
(72) Inventeur: Vraux, Didier, F-93130 Noisy-Le-Sec (FR)
(74) Mandataire: Schrimpf, Robert

(56) Documents cités:
- EP-A- 0 313 779
- DE-A- 3 509 831
- FR-A- 2 624 452

## Description

La présente invention concerne d'une façon générale l'assemblage mécanique de pièces, et concerne plus particulièrement un nouveau moyen d'assemblage utilisable notamment entre un réflecteur de projecteur de véhicule automobile et une tête de vis de réglage d'orientation du réflecteur.

Dans la technique antérieure, une tête de vis de réglage est montée sur le projecteur par l'intermédiaire d'une capsule qui comporte des moyens pour sa fixation permanente sur le corps du réflecteur et des moyens pour recevoir de façon amovible la tête de vis. Et les moyens de fixation classiquement utilisés incluent le collage, le soudage, le vissage, le clipsage et analogues.

On connaît en particulier par FR-A-2 624 452 une capsule ayant les particularités du préambule de la revendication 1

L'inconvénient majeur de ces capsules connues réside dans le fait que les moyens de fixation précités sont tout à fait inadaptés à un montage robotisé des projecteurs de véhicules automobiles ou analogues permettant d'assurer une bonne indémontabilité.

La présente invention vise à pallier ces inconvénient de la technique antérieure et propose à cet effet une capsule de ce type, ayant en outre les particularités de la partie caractérisante de la revendication 1.

De cette manière, la fixation indémontable de la capsule est assurée simplement en faisant coulisser la première partie de la capsule par rapport à la seconde.

Des aspects préférés mais non limitatifs de la capsule selon l'invention sont indiqués dans les sous-revendications 2 à 8.

L'invention concerne également un procédé de montage d'une capsule en deux parties reliées initialement par un film mince comme revendiqué ayant les particularités de la revendication 9. Ce procédé est de préférence mis en oeuvre par des moyens robotisés.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lequel :
la figure 1 est une vue en coupe axiale d'une capsule réalisée selon l'invention, dans un état initial,
la figure 2 est une vue en coupe axiale de la capsule de la figure 1 dans un plan perpendiculaire au plan de coupe de la figure 1,
la figure 3 est une section transversale selon la ligne III-III de la figure 2,
la figure 4 est une section transversale selon la ligne IV-IV de la figure 2,
la figure 5 est une vue en coupe axiale montrant la capsule des figures 1 et 2 dans un état final,
la figure 6 est une vue en élévation de la capsule dans l'état final de la figure 5, montrant également une vis de réglage de réflecteur et une épingle de retenue, et
la figure 7 est une vue d'extrémité de la capsule et de l'épingle de la figure 6.

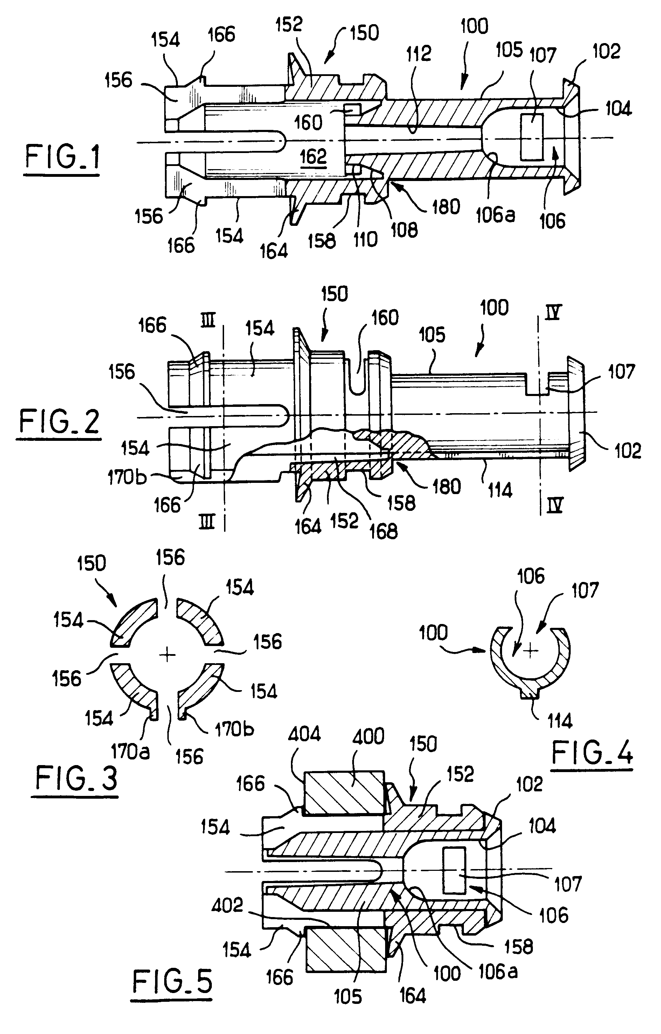

En référence tout d'abord aux figures 1 à 4, on va maintenant décrire une capsule constituant un élément intermédiaire de fixation entre une tête de vis de réglage d'orientation pour un réflecteur de projecteur et ledit réflecteur.

Une telle capsule doit être fixée de façon permanente et fiable au réflecteur et doit pouvoir recevoir la tête de façon amovible.

La capsule, en forme générale de corps de révolution d'axe A, comprend une première partie ou partie de corps 100 dans laquelle la tête doit être reçue, et une seconde partie ou embase 150 pour la fixation de la capsule sur le réflecteur.

Le corps 100, de forme générale cylindrique, comprend à une première extrémité un collet 102 qui entoure une ouverture 104 permettant l'introduction de la tête dans un logement 106. Ce logement de forme cylindrique se termine en un fond 106a, de forme sensiblement hémisphérique dans le présent exemple, contre lequel la tête doit venir s'appliquer. Une fenêtre 107 pratiquée dans la paroi du corps 100 à une profondeur intermédiaire du logement 106 permet, comme on le verra plus loin, la mise en oeuvre de moyens permettant notamment retenir la tête dans son logement.

Le corps 100 comprend une partie centrale cylindrique 105 et à son extrémité opposée au logement 106, il se termine par une partie tronconique 108 formant retrécissement suivie par une courte partie cylindrique 110 de diamètre réduit.

Par ailleurs, un passage essentiellement cylindrique 112 entre le fond du logement 106 et l'extrémité opposée du corps 100 permet d'économiser de la matière.

On peut noter en outre sur la figure 2 que le corps 100 comporte une clavette extérieure longitudinale 114, à des fins expliquées plus loin.

L'embase 150 est en forme générale de fourreau et comporte une partie de forme générale cylindrique creuse 152 à partir de laquelle s'étendent, dans une direction opposée au corps 100, une pluralité de pattes flexibles 154, ici au nombre de quatre, réalisées en pratique par un prolongement de la partie 152 dans lequel sont ménagées quatre encoches longitudinales 156, par exemple mutuellement espacées de 90° autour de l'axe A comme le montre la figure 3.

La partie 152 comporte à une cote axiale bien déterminée une gorge annulaire extérieure 158, et une fenêtre 160 traverse la paroi de la partie 152 entre le fond de cette gorge et un passage central 162.

Un épaulement 164 est prévu à l'extrémité de la partie 152 située à la transition avec les pattes flexibles 154.

Chaque patte 154 comporte dans la région de son extrémité libre, sur sa face extérieure, une dent 166 de section droite essentiellement triangulaire.

Le passage central 162 de la partie 152 présente un diamètre égal ou légèrement supérieur au diamètre extérieur de la partie centrale principale du corps 100, tandis que les quatre pattes 154, à l'état de repos, circonscrivent un cylindre dont le diamètre est également égal ou légèrement supérieur au diamètre extérieur de la partie centrale du corps 100.

Dans la région d'extrémité des pattes 154, sur leur face intérieure, sont par ailleurs prévues une partie tronconique 157 et une partie 159 définissant un diamètre intérieur réduit, ces parties étant essentiellement complémentaires des parties 108 et 110 du corps 100.

Par ailleurs, le passage 162 définit une rainure 168 pour la clavette 114, cette rainure s'étendant dans le prolongement de l'une des encoches 156 qui séparent les pattes flexibles 154 les unes des autres.

Enfin une clavette 170 est définie par deux nervures 170a, 170b formées dans la région de bord de deux pattes flexibles adjacentes 154, de part et d'autre de l'encoche 156 qui sépare lesdites pattes.

Selon l'un des aspects préférés de l'invention, les parties 100 et 150 de la capsule selon l'invention sont initialement réunies l'une à l'autre, comme l'illustrent les figures 1 et 2, par un film mince continu de matière indiqué en 180, qui réunit l'arête située à l'intersection de la paroi du passage intérieur 162 et de la face d'extrémité de la partie 150 opposée aux pattes flexibles à l'arête située à la transition entre la paroi extérieure de la partie principale cylindrique et de la partie tronconique 108 du corps 100.

Ainsi, de façon extrêmement avantageuse, les deux parties de la capsule peuvent être réalisées simultanément en une opération de moulage de matière plastique unique.

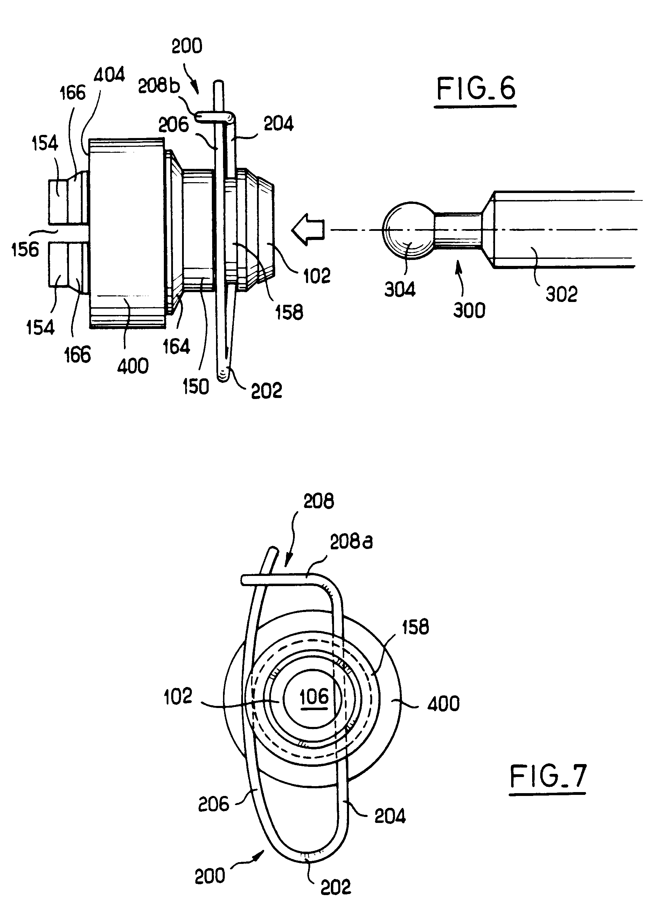

En référence maintenant aux figures 6 et 7, on a représenté une épingle 200 qui présente une forme générale de "U". Elle comporte une partie extrême 202 courbée sur environ 180°, une première branche 204 et une seconde branche 206 essentiellement parallèles, et une branche de verrouillage 208 comprenant une partie transversale 208a, s'étendant à partir de la branche 204 et située essentiellement dans le plan des parties 202, 204 et 206, et une partie d'accrochage 208b essentiellement perpendiculaire à la partie 208a. La région d'extrémité de la seconde branche 206 peut venir s'accrocher derrière la partie 208b, comme illustré sur les figures 6 et 7. L'épingle est réalisée de préférence en un acier relativement élastique.

On a également illustré partiellement sur la figure 6 une vis de réglage 300 destinée à faire varier l'orientation du réflecteur (non représenté) d'un projecteur de véhicule automobile. Elle comprend une tige filetée 302 à une extrémité de laquelle est prévue une tête 304. La tête 304 est ici de forme généralement sphérique, mais une forme par exemple conique peut également être utilisée. En faisant tourner la vis 300 dans un taraudage complémentaire non illustré, à l'aide de moyens d'entraînement non représentés, on peut déplacer la tête 304 dans la direction longitudinale de la vis, de façon classique; si cette tête est solidaire d'un point donné du réflecteur (doté par ailleurs d'une possibilité de pivotement), on fait varier l'inclinaison du réflecteur.

Enfin on a représenté sur les figures 5 à 7 et désigné par la référence 400 une douille qui est solidaire de la paroi arrière d'un réflecteur (non représenté), et par exemple venue de moulage avec lui. Cette douille présente un passage intérieur cylindrique 402 et, à l'arrière (à gauche sur les figures 5 et 6), un bord droit d'accrochage 404. Une rainure (non illustrée) est par ailleurs pratiquée dans le passage cylindrique 402 pour la réception de la clavette constituée par les nervures 170a, 170b.

On va décrire ci-dessous les étapes opératoires pour la fixation de la tête 304 sur l'arrière du réflecteur, et plus précisément sur la douille 400, à l'aide de la capsule selon l'invention.

Tout d'abord, la capsule, dans son état initial tel qu'illustré sur les figures 1 et 2, est amenée au droit du passage 402 de la douille 400, les pattes flexibles 154 faisant face à cette ouverture.

Puis, par une poussée appropriée, les pattes 154 sont introduites dans le passage 402, en se déformant élastiquement vers l'intérieur, jusqu'à ce que les dents 166 atteignent la paroi arrière 404 de la douille et viennent s'accrocher derrière celle-ci par le jeu du rappel élastique.

Ensuite, en exerçant sur le corps 100 une poussée plus importante, et de préférence un choc, pendant que la partie 150 est en appui contre la douille 400, on provoque la rupture du film mince de matière 180 qui solidarise encore à cet instant les parties 100, 150 de la capsule. Sous l'effet de ce choc, ce film se rompt et le corps 100 peut alors coulisser librement (de droite à gauche sur les figures 1 et 2) vers l'intérieur de la partie de fixation. (L'épaisseur du film 180 est bien entendu choisie de manière à ce que la rupture ait lieu avec un choc raisonnable, mais qu'elle ne se produise pas pendant la phase initiale décrite plus haut de mise en place de l'embase 150 dans la douille 400).

Au cours de ce mouvement, l'ensemble du corps 100, à l'exception de son collet 102, vient occuper sensiblement tout l'espace défini précédemment par le passage intérieur 162 de la partie 150, et en particulier la partie du corps située à l'opposé du collet 102 vient s'appliquer relativement étroitement contre les faces intérieures des pattes 154, les parties 108 et 110 du corps venant en outre s'appliquer contre les aménagements complémentaires 157, 159 prévus sur lesdites faces intérieures.

Cet état final de la capsule est illustré sur les figures 5 et 6. L'on comprend aisément que, dans cet état, le corps 100 interdit tout mouvement des pattes flexibles 154 vers l'intérieur, si bien que les dents 166 ne peuvent pas se dégager de leur relation d'accrochage avec la douille 400. La capsule est ainsi fixée en place de façon permanence, avec une fiabilité extrêmement élevée.

Et cette fixation indémontable peut être assurée en exerçant simplement sur le corps 100 deux poussées successives, l'une pour l'engagement des pattes flexibles dans la douille, l'autre pour la rupture du film mince, ces opérations pouvant être effectuées sans difficulté aucune par un robot dans le cadre du montage robotisé de projecteurs et analogues.

Par ailleurs, les fenêtres 107 et 160 formées respectivement dans les parties 100, 150 de la capsule, sont positionnées de telle manière que, dans cet état final, elles soient essentiellement superposées. Cette superposition est en outre assurée par la clavette 114 et la rainure correspondante 168, qui interdisent toute rotation relative du corps 100 et de l'embase 150.

Ainsi, comme l'illustrent les figures 6 et 7, lors de la mise en place de l'épingle dans la rainure 158 de l'embase, et le verrouillage de ladite épingle de telle manière que les deux branches 204, 206 exercent une pression vers l'intérieur, la branche 204 (ce pourrait être également la branche 206) pénètre dans les deux fenêtres 107 et 160 et vient, comme le montre bien la figure 7, empiéter légèrement sur l'espace intérieur 106 de réception de la tête.

Une première fonction de cet engagement de la branche 204 dans les deux fenêtres superposées est de verrouiller mutuellement les deux parties 100, 150 de la capsule, en évitant ainsi que le corps 100 ne puisse coulisser hors de l'embase 150 pour rendre possible un dégagement des pattes 154 hors de leur relation de verrouillage avec la douille 400.

La deuxième fonction de l'épingle est de bloquer la tête 304 dans son logement associé 106 du corps 100, contre le fond 106a.

Dans un premier mode opératoire, on peut tout d'abord mettre en place l'épingle 200 puis introduire la tête 304 selon la flèche F de la figure 6 dans son logement; dans ce cas, la branche 204 s'efface élastiquement pour laisser passer la tête 304, puis revient dans sa position de la figure 6 par rappel élastique pour emprisonner ladite tête dans son logement.

Dans un second mode opératoire, la tête 304 est tout d'abord mise en place, puis l'épingle vient ensuite assurer simultanément le verrouillage mutuel des deux parties de la capsule et l'emprisonnement de la tête.

Bien entendu, l'invention n'est nullement limitée à la forme de réalisation décrite ci-dessus et représentée sur les dessins, mais l'homme de l'art saura y apporter toute variante ou modification conforme à son esprit.

En particulier, les moyens pour maintenir les parties 100 et 150 de la capsule dans leur état initial avant mise en place sur la douille peuvent soit omis, soit être différents du film de matière 180 décrit plus haut. Ainsi dans le premier cas, les deux parties 100 et 150 peuvent être initialement deux pièces distinctes, l'embase 150 étant tout d'abord mise en place sur la douille puis le corps étant ensuite introduit dans l'embase. Dans le second cas, on peut remplacer le film continu de matière 180 par un ensemble de ponts discrets, de nombre et de section appropriés. On peut également en variante utiliser une liaison de type encliquetage ou engagement à force entre les deux parties, cette liaison étant conçue pour autoriser le coulissement mutuel des deux parties seulement sous l'action d'une force sensiblement supérieure à la force nécessaire pour la mise en place de l'embase 150 dans la douille 400. Dans ce cas, la liaison peut être rompue grâce à une déformation permanente et/ou élastique de la matière.

Par ailleurs, on peut imaginer pour interdire le coulissement mutuel des deux parties tout autre moyen que le dispositif à fenêtres superposées et épingle décrit plus haut. Par exemple, on peut prévoir à la fin de la course du corps 100 dans l'embase 150 l'établissement d'une liaison de type encliquetage ou engagement à force entre les deux parties.

Enfin l'invention peut s'appliquer avantageusement à chaque fois qu'une fixation permanente ou semi-permanente est souhaitée sans l'intervention de moyens de fixation classiques tels que mentionnés en introduction.

## Revendications

1. Capsule, notamment pour le montage d'une tête je vis de réglage d'orientation sur un réflecteur de projecteur de véhicule automobile, du type comprenant dans la région d'une première extrémité des moyens (106) pour recevoir la tête (304) et dans la région d'une seconde extrémité des moyens (154) pour la fixation de la capsule sur une monture (400) solidaire du réflecteur, et comportant une première partie (100) comportant un logement (106) pour la tête et une seconde partie (150) comportant les moyens de fixation (154) de la capsule sur le réflecteur, ces moyens de fixation comprenant des moyens flexibles (154) aptes à entrer dans une relation d'accrochage avec ladite monture, caractérisée en ce que ladite première partie de la capsule est capable de coulisser par rapport à la deuxième partie jusqu'à une position de verrouillage dans laquelle elle s'applique contre les moyens flexibles en les empêchant de sortir de leur relation d'accrochage avec la monture.

2. Capsule selon la revendication 1, caractérisée en ce que ses deux parties (100, 150) sont essentiellement cylindriques et coaxiales.

3. Capsule selon la revendication 2 caractérisée en ce que ses deux parties (100, 150) sont capables de coulisser mutuellement à partir d'un état initial dans lequel elles sont réunies par un film mince de matière (180)+.

4. Capsule selon la revendication 3, caractérisée en ce que ses deux parties (100, 150) sont réalisées simultanément au cours d'une même opération de moulage.

5. Capsule selon l'une des revendications 2 à 4, caractérisée en ce que les moyens flexibles comprennent une pluralité de pattes flexibles (154) portant dans la région d'une extrémité libre au moins une dent d'accrochage extérieure (166), et en ce que la monture du réflecteur est constituée par une douille (400) comportant une paroi arrière (404) sur laquelle les dents peuvent s'accrocher.

6. Capsule selon l'une des revendications 1 à 5, caractérisée en ce qu'il est prévu des moyens (200, 107, 160) pour immobiliser l'une par rapport à l'autre les deux parties de la capsule dans la position de verrouillage.

7. Capsule selon la revendication 6, caractérisée en ce que les moyens d'immobilisation (200, 107, 160) constituent également des moyens d'emprisonnement de la tête dans son logement.

8. Capsule selon la revendication 7, caractérisée en ce que les moyens d'immobilisation et d'emprisonnement comprennent une épingle (200) apte à être resserrée autour des deux parties de la capsule en pénétrant dans deux fenêtres (107, 160) prévues respectivement dans lesdites parties (100, 150) et qui, dans la position de verrouillage, sont situées au droit l'une de l'autre.

9. Procédé de montage d'une capsule selon la revendication 3, caractérisé en ce qu'il comprend les étapes consistant à:
- exercer sur la première partie (100) de la capsule une première poussée pour engager les moyens flexibles (154) dans la monture (400) et établir la relation d'accrochage, tandis que ladite monture tient lieu de butée pour la seconde partie de la capsule, puis
- exercer sur la première partie (100) de la capsule une seconde poussée, plus importante que la première, de manière à rompre le film mince (180) et faire coulisser ladite première partie jusqu'à la position de verrouillage.

10. Procédé selon la revendication 9, caractérisé en ce qu'il est mise en oeuvre à l'aide de moyens robotisés.

## Claims

1. A capsule, in particular for mounting the head of an angle-adjustment screw on a reflector of a motor vehicle headlight, the capsule being of the type comprising, in the vicinity of a first end, means (106) for receiving the head (304), and in the vicinity of a second end, fixing means (154) for fixing the capsule to a mount (400) fixed to the reflector, and including a first portion (100) including a housing (106) for the head, and a second portion (150) including the fixing means (154) for fixing the capsule to the reflector, said fixing means comprising flexible means (154) suitable for entering into latching engagement with said mount, characterized in that said first portion of the capsule is capable of sliding relative to the second portion to a locking position in which it bears against the flexible means, preventing them from moving out from their latching engagement with the mount.

2. A capsule according to claim 1, characterized in that both portions (100, 150) are essentially cylindrical and coaxial.

3. A capsule according to claim 2, characterized in that the two portions (100, 150) are capable of sliding relative to each other from an initial state in which they are interconnected by a thin film of material (180).

4. A capsule according to claim 3, characterized in that both portions (100, 150) are made simultaneously during the same molding operations.

5. A capsule according to any one of claims 2 to 4, characterized in that the flexible means comprise a plurality of flexible tabs (154) each carrying at least one external catch (166) in the vicinity of its free end, and in that the reflector mount is constituted by a socket including a rear wall (404) against which the catches are capable of engaging.

6. A capsule according to any one of claims 1 to 5, characterized in that it is provided with stop means (200, 107, 160) for preventing one of the two portions of the capsule from moving relative to the other when in the locking position.

7. A capsule according to claim 6, characterized in that the stop means (200, 107, 160) also include imprisoning means for imprisoning the head in its housing.

8. A capsule according to claim 7, characterized in that the stop means and the imprisoning means are constituted by a clip (200) suitable for being clamped around the two portions of the capsule, penetrating into two windows (107, 160) which are provided in respective ones of said portions (100, 150) and which, in the locking position, overlie each other.

9. A method of assembling a capsule according to claim 3, the method being characterized in that it comprises the following stages:
exerting a first thrust on the first portion (100) of the capsule to engage the flexible means (154) in the mount (400) and to establish the latching engagement, while the said mount acts as an abutment for the second portion of the capsule; and then
exerting a second thrust on the first portion (100), said second thrust being greater than the first thrust, thereby breaking the thin film (180) and causing said first portion to slide into said locking position.

10. A method according to claim 9, characterized in that it is formed by robot means.

## Patentansprüche

1. Kapsel, insbesondere zur Montage eines Stellschraubenkopfs für die Einstellung eines Reflektors eines Automobilscheinwerfers, die im Bereich eines ersten Endes Mittel (106) für das Einsetzen des Schraubenkopfs (304) und im Bereich eines zweiten Endes Mittel (154) für die Befestigung der Kapsel an einer fest mit dem Reflektor verbundenen Fassung (400) enthält, und bestehend aus einem ersten Teil (100) mit einer Aufnahme (106) für den Schraubenkopf und einem zweiten Teil (150) mit den Mitteln (154) zur Befestigung der Kapsel am Reflektor, wobei diese Befestigungsmittel biegsame Mittel (154) umfassen, die mit der Fassung in Eingriff treten können, **dadurch gekennzeichnet,** daß sich der genannte erste Teil der Kapsel im Verhältnis zu dem zweiten Teil bis zu einer Verriegelungsposition verschieben kann, in der er auf die biegsamen Mitteln aufgedrückt wird und diese daran hindert, sich aus ihrem Eingriff mit der Fassung zu lösen.

2. Kapsel nach Anspruch 1, **dadurch gekennzeichnet,** daß ihre beiden Teile (100, 150) in etwa zylindrisch und koaxial ausgeführt sind.

3. Kapsel nach Anspruch 2, **dadurch gekennzeichnet,** daß sich ihre beiden Teile (100, 150) gegeneinander von einem Ausgangszustand aus verschieben können, in dem sie durch eine einteilige dünne Folie (180) miteinander verbunden sind.

4. Kapsel nach Anspruch 3, **dadurch gekennzeichnet,** daß ihre beiden Teile (100, 150) gleichzeitig im Verlauf eines einzigen Formvorgangs hergestellt werden.

5. Kapsel nach einem der Ansprüche 2 bis 4 , **dadurch gekennzeichnet,** daß die biegsamen Mittel eine Mehrzahl von biegsamen Klammern (154) umfassen, an denen sich im Bereich eines freien Endes mindestens ein äußerer Haltezahn (166) befindet, und daß die Fassung des Reflektors aus einer Hülse (400) besteht, die eine Rückwand (404) umfaßt, an der die Zähne eingreifen können.

6. Kapsel nach einem der Ansprüche 1 bis 5 , **dadurch gekennzeichnet,** daß Mittel (200, 107, 160) für die Sicherung der beiden Teile der Kapsel im Verhältnis zueinander in der Verriegelungsposition vorgesehen sind.

7. Kapsel nach Anspruch 6, **dadurch gekennzeichnet,** daß die Sicherungsmittel (200, 107, 160) außerdem Mittel zum Festhalten des Schraubenkopfs in seiner Aufnahme bilden.

8. Kapsel nach Anspruch 7, **dadurch gekennzeichnet,** daß die Sicherungs- und Festhaltemittel einen Sicherungsbügel (200) umfassen, der um die beiden Teile der Kapsel geschlossen werden kann, wobei er in zwei Fenster (107, 160) eindringt, die jeweils in den genannten Teilen (100, 150) vorgesehen und in der Verriegelungsposition übereinander angeordnet sind.

9. Verfahren zur Montage einer Kapsel nach Anspruch 3, **dadurch gekennzeichnet,** daß es die folgenden Ablaufphasen umfaßt, bei denen:
- auf den ersten Teil (100) der Kapsel ein erster Druck ausgeübt wird, um die biegsamen Mittel (154) in die Fassung (400) einzuschieben und den Eingriff herzustellen, während die Fassung als Anschlag für den zweiten Teil der Kapsel dient, und anschließend
- auf den ersten Teil (100) der Kapsel ein zweiter Druck ausgeübt wird, der stärker als der erste ist, um den Riß der dünnen Folie (180) zu bewirken und den ersten Teil bis zur Verriegelungsposition zu verschieben.

10. Verfahren nach Anspruch 9 , **dadurch gekennzeichnet,** daß es mit Hilfe von vollautomatisierten Mitteln eingesetzt wird.
